# DEMANDE DE BREVET EUROPEEN

(11) **EP 1 096 753 A1**
(43) Date de publication de la demande: **02.05.2001**
(21) Numéro de dépôt: 00402944.3
(22) Date de dépôt: 24.10.2000
(51) Int. Cl.: H04L 29/06, H04M 3/00

(54) **Utilisation des outils sim entre un réseau et un téléphone mobile**

(30) Priorité: 25.10.1999 FR 9913263
(71) Demandeur: ALCATEL, 75008 Paris (FR)
(72) Inventeur: Helaine, Hubert, Woodley Reading, Berkshire RG5 4UH (GB)
(74) Mandataire: Lamoureux, Bernard

(57) **Abrégé**

L'invention concerne un procédé de transmission de données entre un serveur abritant des applications et un terminal de radiocommunications utilisant le protocole GSM, comportant au moins une étape de communication entre le serveur et le terminal caractérisé en ce que le protocole SATK est utilisé de telle sorte que le serveur exécute lesdites applications sans les transférer dans le terminal.

## Description

L'invention concerne le domaine des transmissions de données entre un réseau informatique et un dispositif itinérant. Elle s'applique plus particulièrement au domaine de la téléphonie mobile.

L'utilisation croissante d'objets itinérants, ou nomades, permettant de transmettre la voix ou des données demande des applications légères et fonctionnelles. En particulier, les téléphones mobiles, appelés communément mobiles, ne se contentent plus seulement de transmettre la voix, mais permettent d'utiliser des applications telles qu'un agenda, des jeux, ou des navigateurs compatibles avec des réseaux tels qu'Internet. Les mobiles utilisent des protocoles annexes de communication permettant de gérer l'accès au téléphone, comme les outils liés à la carte SIM, ou de transmettre des messages écrits du type SMS (Short Message Service) ou USSD (UnStructured Service Data).

Les protocoles existants qui permettent la transmission d'applications en temps réel ont besoin de mémoire temporaire afin de mémoriser les différents éléments manipulés et ont des contraintes relatives à l'affichage dans le dispositif, comme cela peut se voir dans le protocole WAP et dans les protocoles de navigation sur Internet. Ces protocoles demandent de mémoriser les objets à afficher (texte, images) suivant une mise en page déterminée par un objet particulier.

Ainsi, le protocole WAP nécessite que l'appareil possède un disque dur (ROM), de la mémoire volatile (RAM), ainsi qu'un écran possédant au moins 4 lignes. Les téléphones mobiles bon marché ne peuvent pas en être équipés.

D'autres protocoles comme le SMS ou le USSD sont limités en capacité et en fonctions. Ils ne permettent par exemple pas l'affichage de listes ou de menus déroulants. Quant au protocole USSD, l'interface homme-machine est trop limitée : elle ne permet que la gestion de chaînes de caractères, ce qui n'est pas suffisant pour les applications d'aujourd'hui.

Par exemple, la demande W09857511 concerne un procédé destiné à un système de télécommunications sans fil permettant une activation ou une désactivation automatique d'une fonction de verrouillage SIM dans un réseau GSM. Avant la distribution d'un terminal de télécommunication à un utilisateur, un téléphone et une carte SIM sont adaptés l'un à l'autre. La fonction de verrouillage SIM est comprise dans la connexion. Par conséquent, l'utilisateur ne peut pas utiliser d'autres cartes SIM que celles contenues dans le lot remis au client lors de l'achat du téléphone. L'invention est caractérisée par le procédé impliquant que la fonction de verrouillage SIM peut être déverrouillée à l'aide de fonctions boîte à outils SIM et un service de télécommunications tels que SMS ou USSD. Le déverrouillage de la fonction de verrouillage SIM est commandé par différents critères comme, par exemple, lorsque le client a envoyé son autorisation signée à l'opérateur du réseau.

Plus généralement, la carte SIM comporte les outils permettant la mise en oeuvre d'applications sur l'appareil lui-même dans un ensemble appelé SATK (Sim Application Tool Kit).

Les outils SATK nécessitent de mémoriser une application dans la carte SIM avant de l'utiliser. Ceci crée alors des problèmes de gestion de la mémoire dans la carte. Les applications non utilisées doivent par exemple être effacées pour libérer de l'espace mémoire. Les applications en temps réel sont de plus difficiles à mettre en oeuvre.

L'interface homme-machine dans les applications vocales est très lente du point de vue de l'utilisateur et les données que l'on peut entrer sont très limitées.

Aucune solution de l'art antérieur ne propose un procédé permettant de mettre en oeuvre des applications ergonomiques et nécessitant peu de matériel supplémentaire pour un coût minime.

L'invention concerne un procédé de transmission de données entre un serveur abritant des applications et un terminal de radiocommunications utilisant le protocole GSM, comportant au moins une étape de communication entre le serveur et le terminal. Elle se caractérise en ce que le protocole SATK est utilisé de telle sorte que le serveur exécute lesdites applications sans les transférer dans le terminal.

Avantageusement, le terminal utilise le protocole SMS PP ou le protocole SMS CB pour communiquer avec le serveur. Dans une variante, le terminal utilise le protocole USSD pour communiquer avec le serveur. Il est également avantageux d'utiliser un protocole de communication local pour la transmission des données à un serveur proche.

Dans une variante préférée, le terminal utilise simultanément différents protocoles de communication. Éventuellement, le terminal communique simultanément avec plusieurs serveurs d'applications.

Le procédé selon l'invention propose d'utiliser dans un téléphone mobile des applications qui sont mémorisées dans un réseau ou dans un élément du réseau. Ces applications peuvent être en temps réel et relatives à la mobilité, aux applications distribuées, aux interfaces homme-machine dans un réseau. Les applications utilisées par les téléphones peuvent également se trouver dans terminaux locaux utilisant des modes de communication différents du mode utilisé par le téléphone mobile. Il peut s'agir, par exemple, de communications radio locales, de communication par infrarouge ou de communication par un câble.

Dans le cadre de l'invention, on utilise et l'on adapte le protocole SATK entre le serveur sur le réseau et le téléphone mobile afin d'accéder à distance aux services mémorisés sur le réseau.

Les téléphones mobiles sont conçus pour utiliser le protocole SATK, certaines applications l'utilisent sur différents types de protocoles comme le SMS ou l'USSD, avec des adaptations.

L'invention consiste à rajouter au protocole SATK une partie de communication active avec le réseau. Ce protocole SATK est déjà présent dans tous les équipements pour gérer les communications entre la carte SIM et le téléphone en lui-même.

Toutes les applications sont réalisées sur un serveur d'applications qui possède les moyens d'effectuer les différents calculs nécessaires. Le serveur d'application utilise un environnement d'exécution et l'interface entre le protocole SATK du téléphone mobile et le protocole permettant de transmettre les données du serveur au terminal mobile. Ce protocole peut être le SMS point à point (SMS PP), le SMS transmis par cellules (SMS CB), l'USSD ou le GPRS (General Packet Radio Service). Lors d'un accès local, on peut utiliser le protocole RS232 pour des accès par fil, le protocole Irda pour un accès par infrarouge, ou le protocole Bluetooth pour un accès radio. Ces différents types de protocoles ne sont pas limitatifs.

Suivant les options d'exécutions et le type de protocole de communication, le serveur d'application peut appartenir au réseau téléphonique ou non. Dans le cas où le serveur n'appartient pas au réseau de communication, il est nécessaire de prévoir une interface spécifique lui permettant de communiquer avec ce réseau. On entend ici par réseau de communication, un réseau de télécommunication mobile suivant par exemple la norme GSM.

Le réseau de communication peut posséder des moyens permettant d'indiquer la présence ou non d'un mobile et donner le moyen d'atteindre un mobile, ce qui est déjà défini dans la norme GSM pour les serveurs SMS ou les réseaux USSD.

Suivant le type de service, le serveur ou l'utilisateur peuvent avoir l'initiative de débuter ou de clore une session entre le serveur et le mobile. Par exemple, un mécanisme d'alerte boursière sera initié par le serveur, alors qu'une requête d'informations météorologiques sera effectuée par le client. Pendant une session, le serveur et le mobile peuvent échanger différents types d'interactions.

Le mobile possède toujours une mémoire minimale dont peut se servir le serveur d'applications. Le serveur peut jouer avec les capacités du mobile quand il le faut et mémoriser les résultats entre deux sessions ou entre deux connexions au réseau. Il peut également s'en servir comme une mémoire tampon si des contraintes d'affichages se font sentir.

Les interactions avec le serveur sont avantageusement requises par la sélection d'un menu particulier par l'utilisateur. Ce menu est intégré dans les outils SATK, ce qui n'induit pas de développement supplémentaire d'application dans le mobile. Le serveur peut lui-même requérir des interactions avec le réseau lui-même via le mobile.

Les interactions du serveur d'application avec l'utilisateur via le mobile peuvent être la gestion d'un menu de réglage des paramètres, l'affichage d'un texte, l'affichage d'une liste d'objets et la sélection de l'un d'entre eux, l'entrée d'un caractère, l'entrée d'une chaîne de caractères, ou l'émission d'un son. Les interactions du serveur d'application avec un mobile peuvent consister en la fourniture d'information locale.

Le serveur peut lui-même régler les paramètres d'un transfert de voix ou de données, envoyer un message SMS, envoyer un contrôle sur les services supplémentaires (SS), ou envoyer une chaîne de caractères USSD.

Il est possible qu'un serveur synchronise une application SATK et une application réseau, de manière à limiter les échanges avec le réseau dans une application en temps réel. Dans ce cas, le serveur peut se servir de la carte SIM pour partager les ressources, comme cela peut être le cas dans tous environnement multi-tâches.

Le mobile, par construction, peut accepter simultanément plusieurs applications (SATK, réseau, ...).

L'invention est particulièrement adaptée au réseau GSM. Elle permet de limiter la mémoire utilisée, et ce système est accepté par tous les téléphones mobiles et est adapté aux canaux de bande étroite comme le SMS ou l'USSD

Le protocole nécessite l'ajout de fonctionnalités supplémentaires permettant la mise en oeuvre des communications entre les terminaux et le réseau. Le protocole SATK gère à l'origine les communications entre la carte SIM et le téléphone. Dans le cadre de l'invention, on spécifie que les éléments fixes CTS ou les dispositifs appartenant au réseau sont les éléments gérés par le nouveau protocole. Chaque service accessible par un téléphone possède son propre ensemble de paramètres. Avantageusement, on définit un champs de données spécifique permettant de requérir de manière automatique une communication avec un service dès que le menu correspondant à ce service est sélectionné sur le téléphone. Les champs de données spécifiques existent dans les différents protocoles de communication. L'invention utilise ces champs de données pour communiquer les données nécessaires aux sessions d'applications.

Les sessions peuvent être simultanées, pour un ou plusieurs services. Un protocole de connexion est associé à chaque service, ce protocole pouvant être sélectionné par le menu des paramètres, ou le mobile (ou la carte SIM) peut utiliser un protocole par défaut et posséder un point d'accès au serveur. Il est possible de définir une syntaxe simple spécifiant le serveur et le protocole de connexion, par exemple : [SMS, code du service].

Une session est considérée comme close quand la connexion est terminée. On ajoute des moyens de clore la session normalement et des moyens de prolonger une session pour éviter les déconnexions dues au protocole porteur.

Il est aussi nécessaire d'adapter les nouveaux protocoles aux différents types de connexion.

Le système USSD est le système le plus simple à ce jour et le mieux adapté à des communications avec des parties fixes CTS. On utilise préférentiellement la phase 2+ de l'USSD, en permettant l'accès à la phase 2 si cette phase 2+ n'est pas acceptée.

Il faut prévoir les différents type de communication. Si les données USSD sont acceptées par le réseau, on transmet un en-tête, défini pour le protocole SATK. Cet en-tête permet d'identifier le type de noeud auquel le mobile s'adresse. Les données sont définies par le protocole SATK. Si ces données USSD ne sont pas acceptées par le réseau, en particulier dans le cas où le mobile effectue une requête vers ce réseau, une partie du code SATK identifie un service supplémentaire permettant de diriger le message. La partie textuelle comprend les applications SATK.

Dans une variante, il peut être intéressant d'utiliser le format SMS PP pour transmettre les informations, en particulier pour les réseaux extérieurs qui veulent intégrer le SATK dans un centre SMS.

Il faut également définir un en-tête spécifique à ce type de connexion. Le début et la fin de la session s'effectuent en envoyant un message SMS comportant une commande SATK. Les transactions générées par le serveur et les mobiles sont constituées par un message SMS comportant une commande SATK. Le destinataire transmet sa réponse dans l'accusé de réception.

Une autre variante consiste à utiliser le transfert de données. Dans ce cas, la session est ouverte par l'établissement du lien, par exemple du type PPP (point to point protocol). La session est close lorsque le lien est fermé. Le serveur et les mobiles envoient respectivement les commandes et les réponses SATK dans les messages transmis par le protocole.

Il est également possible de gérer à distance les interfaces de serveurs tels que Bluetooth ou des bases fixes. L'interface homme machine est déportée sur le mobile, alors que le serveur continue à gérer les applications. Cette utilisation est particulièrement utile dans le cas de systèmes fermés dont il faut pouvoir gérer l'interface homme/machine à distance.

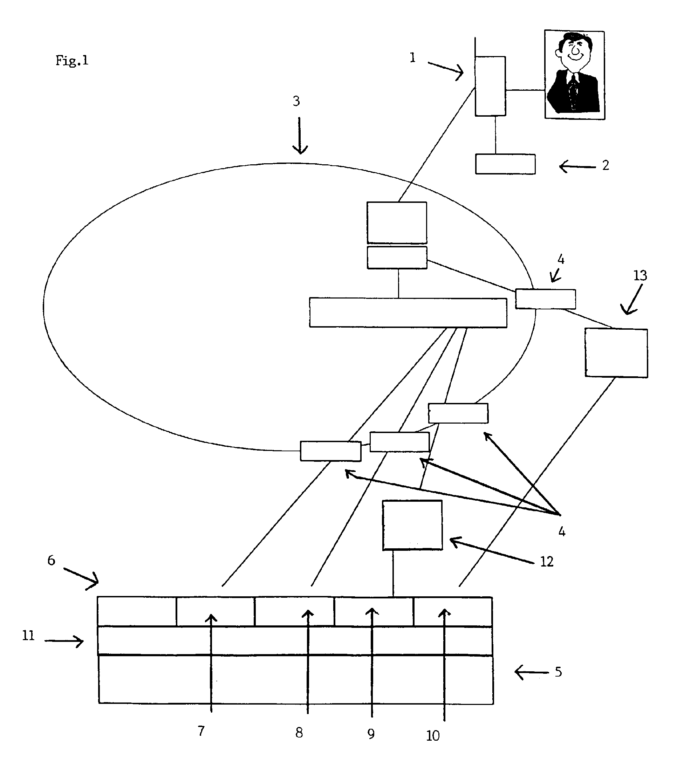

La figure 1 montre la structure générale du système défini selon l'invention lorsque l'on utilise un réseau de télécommunication. Le mobile 1, muni de sa carte SIM 2 communique avec le réseau 3 les différentes données nécessaires à la gestion différents services. Les passerelles 4 permettent de transférer les données qui ne sont pas liées à un appel téléphonique. Les passerelle envoient par exemple les données au centres de gestion des messages SMS PP 12 et SMS CB 13 qui les transfèrent aux ports spécifiques 9 et 10 du serveur d'applications, qui possède une interface de transport 11 permettant de reconnaître les commandes transmises. Ces commandes sont ensuite communiquées aux applications qui gèrent ces commandes et envoient les réponses correspondant à ces commandes. Dans le cas de l'USSD et des données, les passerelles envoient directement les messages aux ports adaptés 7 et 8, eux-mêmes reliés à la même interface 11. Il est également prévu de gérer d'autre types de protocole par des ports spécifiques 6. Dans tous les cas, on utilise les protocoles de communication connus pour transmettre les informations nécessaires.

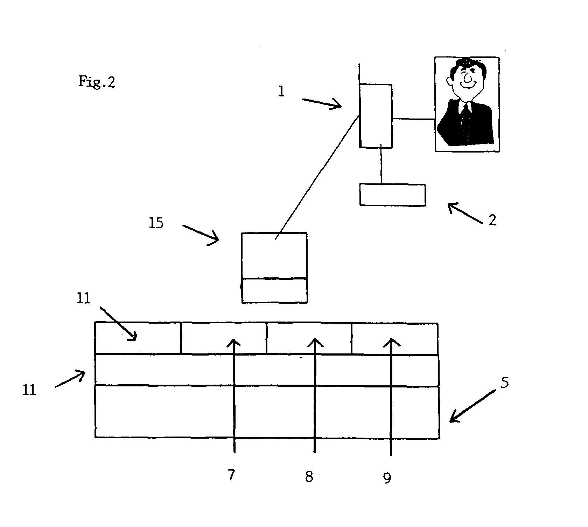

La figure 2 montre l'utilisation du système pour effectuer une interface avec une base fixe 15. Le mobile 1, équipé de sa carte SIM 2 peut alors commander la base fixe par le biais d'une interface permise par les outils SATK.

Les différents services utilisés peuvent nécessiter de protéger la confidentialité des données transférées, ou, dans le cas où l'on utilise des moyens de paiement, de vérifier l'identité de l'utilisateur et/ou de valide les achats. À cet effet, les couches protocolaires utilisées par les outils SATK peuvent fournir des fonctions d'authentification du serveur, de signature du contenu, des fonctions d'encryptage et d'intégrité des données.

## Revendications

1. Procédé de transmission de données entre un serveur abritant des applications et un terminal de radiocommunications utilisant le protocole GSM, comportant au moins une étape de communication entre le serveur et le terminal caractérisé en ce que le protocole SATK est utilisé de telle sorte que le serveur exécute lesdites applications sans les transférer dans le terminal.

2. Procédé de transmission de données selon la revendication 1 caractérisé en ce que le terminal utilise le protocole SMS pour communiquer avec le serveur.

3. Procédé de transmission de données selon la revendication 1 caractérisé en ce que le terminal utilise le protocole USSD pour communiquer avec le serveur.

4. Procédé de transmission de données selon la revendication 1 caractérisé en ce que le terminal utilise un protocole de communication local.

5. Procédé de transmission de données selon l'une quelconque des revendications précédentes caractérisé en ce que le terminal utilise simultanément différents protocoles de communication.

6. Procédé de transmission de données selon la revendication 5 caractérisé en ce que le terminal communique simultanément avec plusieurs serveurs d'applications.

7. Procédé de transmission de données selon l'une quelconque des revendications précédentes caractérisé en ce que le serveur d'applications est commandé par le terminal mobile pour gérer des applications indépendantes dudit terminal mobile.

8. Procédé de transmission de données selon la revendication 7 caractérisé en ce que le serveur d'application est constitué par une base fixe de radiocommunication.

9. Procédé de transmission de données selon la revendication 7 caractérisé en ce que le serveur d'applications est constitué par un serveur Bluetooth.

10. Terminal mobile de radiocommunication utilisant le protocole GSM, communiquant avec un serveur abritant des applications et utilisant une pluralité de protocoles de communication de données caractérisé en ce qu'il comporte des moyens d'interfaçage du protocole SATK et des protocoles de communication afin que le serveur exécute lesdites applications sans les transférer dans le terminal.

11. Terminal selon la revendication 10 caractérisé en ce que ledit terminal comporte des moyens d'interfaçage entre le protocole SATK et le protocole SMS pour communiquer avec le serveur.

12. Terminal selon la revendication 10 caractérisé en ce que ledit terminal comporte des moyens d'interfaçage entre le protocole SATK et le protocole USSD pour communiquer avec le serveur.

13. Terminal selon la revendication 10 caractérisé en ce que ledit terminal comporte des moyens d'interfaçage entre le protocole SATK et un protocole de communication local.

14. Terminal selon l'une quelconque des revendications 10 à 13 caractérisé en ce que ledit terminal comporte des moyens permettant d'utiliser simultanément différents protocoles de communication.

15. Terminal selon l'une quelconque des revendications 10 à 13 caractérisé en ce que ledit terminal comporte des moyens permettant de communiquer simultanément avec plusieurs serveurs d'applications.

16. Terminal selon l'une quelconque des revendications 10 à 15 caractérisé en ce que ledit terminal comporte des moyens permettant d'utiliser simultanément différents protocoles de communication.
